# EUROPÄISCHE PATENTSCHRIFT

(11) **EP 0 986 835 B1**
(45) Veröffentlichungstag und Bekanntmachung des Hinweises auf die Patenterteilung: **12.11.2003**
(21) Anmeldenummer: 98933443.8
(22) Anmeldetag: 06.05.1998
(51) Int. Cl.: H01Q 1/24, H04B 1/38, H04M 1/02, H01Q 3/16, H01Q 3/18

(54) **FUNKGERÄT MIT BEWEGLICHER ANTENNE**
RADIO DEVICE WITH MOVEABLE ANTENNA
APPAREIL RADIO A ANTENNE MOBILE

(30) Priorität: 04.06.1997 DE 19723331
(43) Veröffentlichungstag der Anmeldung: 22.03.2000
(73) Patentinhaber: ROBERT BOSCH GMBH, 70442 Stuttgart (DE)
(72) Erfinder: HOFFMEISTER, Markus, D-38239 Salzgitter (DE); GRUNEWALD, Jörg, D-71522 Backnang (DE)
(86) Internationale Anmeldenummer: DE9801238
(87) Internationale Veröffentlichungsnummer: WO98056065

(56) Entgegenhaltungen:
- WO-A-92/09163
- WO-A-94/18817
- WO-A-97/02621
- WO-A-97/15960
- US-A- 5 255 001
- PATENT ABSTRACTS OF JAPAN vol. 096, no. 011, 29. November 1996 & JP 08 191210 A (KYOCERA CORP), 23. Juli 1996

## Beschreibung

### Stand der Technik

Die Erfindung geht von einem Funkgerät aus mit einem Gehäuse, das an einer ersten Seite eine Hörvorrichtung und an der zweiten gegenüberliegenden Seite ein Antennenelement umfasst, das beweglich gelagert ist.

Aus der WO95/24746 ist bereits ein Handgerät zum Senden und/oder Empfangen bekannt. Das Gerät umfaßt ein Gehäuse mit einem elektrischen Schaltkreis darin, einer Hörvorrichtung an einer Seite des Gehäuses, eine elektrische Bezugspotentialfläche an der anderen Seite des Gehäuses gegenüber der Hörvorrichtung und ein Antennenresonatorelement, das annähernd parallel zur Bezugspotentialfläche angeordnet ist und an einem Ende elektrisch leitend mit der Bezugspotentialfläche verbunden ist.

Aus der US 5 255 001 A ist ein Funkgerät mit einem Gehäuse bekannt, das an einander gegenüberliegenden Seiten eine Hörvorrichtung und ein beweglich gelagertes Antennenelement umfasst, wobei das Antennenelement in einer ersten Position eine gerichtete und in einer zweiten Position eine omnidirektionale Abstrahlcharakteristik aufweist. Es sind der jeweiligen Antennenposition zugeordnete Anpassmittel vorgesehen.

Die WO 97/02621 A zeigt eine Antennenanordnung mit einem drehbaren Antennenarm. In einer ersten Position wird zirkulare Polarisation erzielt. In einer zweiten Position arbeitet die Antenne als Whip Antenne.

Die WO 94/18817 A zeigt eine Schirmung zwischen der Antenneneinrichtung und dem Nutzer, um die elektromagnetische Belastung des Nutzers zu reduzieren. Die Schirmung wird bei Gerätebenutzung in eine Position zwischen Hörvorrichtung und Antenne gebracht.

Die WO 97/15960 A zeigt zwei Antennenelemente, wobei eines davon positionsabhängig mit einer leitenden Kontaktfläche verbunden wird.

### Vorteile der Erfindung

Das erfindungsgemäße Funkgerät mit den Merkmalen des Hauptanspruchs hat den Vorteil, daß das Antennenelement am Gehäuse des Funkgerätes verschiedene Positionen einnehmen kann. Auf diese Weise besteht die Möglichkeit, durch Verändern der Position des Antennenelementes die Sende- und/oder Empfangsbedingungen zu verbessern. Wenn das Antennenelement als Richtstrahler arbeitet, können schädliche Einstrahlungen in den Kopf des Benutzers vermieden werden. Aufgrund der Positionierung des Antennenelementes auf der zweiten Seite des Gehäuses und der Abschirmung durch das Schirmgehäuse zeigt in diesem Fall die Strahlrichtung vom Kopf des Benutzers weg, so daß die Einstrahlung von elektromagnetischer Energie in den Kopf des Benutzers verringert wird. Reichen die technischen Eigenschaften dieses Antennenelementes für die Verbindung zur Basisstation nicht mehr aus, so hat der Benutzer die Möglichkeit, durch Verändern der Position des Antennenelementes die besseren Eigenschaften einer omnidirektionalen Antenne zu nutzen, deren Abstrahlung nicht mehr durch das Schirmgehäuse beeinträchtigt wird. Dadurch wird jedoch die Einstrahlung in den Kopf des Benutzers auf einen Wert erhöht, der bei den heute verbreiteten Mobilfunkgeräten üblich ist.

Das erfindungsgemäße Funkgerät vereint damit die beiden heute üblichen Antennenkonzepte. Es bietet dem Benutzer die Möglichkeit, die für seinen Anwendungsfall am besten geeignete Betriebsart auszuwählen. Er kann im Normalbetrieb die Vorteile der Richtantenne mit vergleichsweise geringer Körpereinstrahlung nutzen, hat aber bei schlechten Sendebedingungen die Möglichkeit, die besseren Sendeeigenschaften einer omnidirektionalen vom Funkgerät wegstehenden Monopolantenne zu nutzen und damit eine verbesserte Verbindung zu erzielen.

Durch die in den Unteransprüchen aufgeführten Maßnahmen sind vorteilhafte Weiterbildungen und Verbesserungen des im Hauptanspruch angegebenen Funkgerätes möglich.

Besonders vorteilhaft ist es, daß das Antennenelement in ein an der zweiten Seite des Gehäuses beweglich gelagertes Gehäuseteil integriert ist. Auf diese Weise wird das Antennnenelement vor äußeren Einflüssen und Beschädigungen geschützt. Außerdem läßt sich durch entsprechende Gestaltung der Form des Gehäuseteils der Bewegungsvorgang des Antennenelementes für den Benutzer erleichtern und verbessern.

Ein weiterer Vorteil besteht darin, daß die Impedanz des Antennenelementes über verschiedene Anpaßschaltungen transformierbar ist, die unterschiedlichen Positionen zugeordnet sind. Auf diese Weise lassen sich die bei verschiedenen Positionen des Antennenelementes auftretenden unterschiedlichen Impedanzen jeweils optimal an die Eingangsimpedanzen der weiterführenden Schaltungen anpassen, so daß trotz verschiedener Positionen des Antennenelementes jeweils optimale Antenneneigenschaften beibehalten werden können.

Ein weiterer Vorteil besteht darin, daß das Antennenelement mit einem die Leiterplatte umschließenden Schirmgehäuse elektrisch leitend verbindbar ist. Dies stellt eine besonders einfache und wenig aufwendige Möglichkeit zur Realisierung einer Anpaßschaltung dar.

Besonders vorteilhaft ist es, daß das Antennenelement einen Schleifkontakt umfaßt, der in Abhängigkeit der Position des Antennenelementes mit einer elektrisch leitfähigen Kontaktfläche auf der zweiten Seite des Gehäuses kontaktiert, wobei die Kontaktfläche elektrisch leitend mit dem Schirmgehäuse verbunden ist. Auf diese Weise ist eine fertigungstechnisch einfache Kontaktierung möglich. Außerdem kann durch geschickte Anordnung der Kontaktfläche abhängig von der Position des Antennenelementes der Schleifkontakt die Kontaktfläche kontaktieren oder nicht. Somit können auf einfachste Weise zwei verschiedene Anpaßschaltungen realisiert werden.

Ein weiterer Vorteil besteht darin, daß das Antennenelement in einer Ebene, die im wesentlichen parallel zur Leiterplatte ist, verschiebbar und/oder drehbar gelagert ist. Auf diese Weise läßt sich eine Vielzahl von Positionen für das Antennenelement durch den Benutzer einstellen, so daß er für viele verschiedene Neigungswinkel seines Funkgerätes jeweils die für optimale Sende- und/oder Empfangsbedingungen erforderliche Position des Antennenelementes einstellen kann. Eine drehbare und/oder verschiebbare Lagerung des Antennenelementes ermöglicht außerdem eine fertigungstechnisch einfache Kontaktierung zum Beispiel über den Schleifkontakt. So bietet die drehbare Lagerung beispielsweise den Vorteil, daß das Antennenelement auch bei Abwinklung des Funkgerätes gegenüber der Vertikalen noch senkrecht stehen kann und damit in derselben Polarisation abstrahlen bzw. empfangen kann wie übliche Basisstationsantennen beispielsweise gemäß dem GSM-Standard (Global System for Mobile Communications).

Werden beispielsweise vertikal linear polarisierte Wellen gesendet bzw. empfangen, so treten bei einer Neigung des Funkgerätes mit dem Antennenelement gegenüber der Vertikalen Sende- bzw. Empfangsverluste gegenüber den in derselben Polarisation empfangenden bzw. abstrahlenden Antennen der Basisstationen auf, wie es beispielsweise beim GSM-Standard der Fall ist. Bei geneigtem Funkgerät kann gemäß der Erfindung das Antennenelement also in eine Position gebracht werden, in der die Polarisationsrichtung auf die Basisstationsantennen abgestimmt ist, so daß Sende- bzw. Empfangsverluste verringert werden.

Eine fertigungstechnisch einfache Lösung wird dadurch erzielt, daß eine Drehachse des Antennenelementes durch den Anschlußpunkt verläuft. Auf diese Weise wird auch die mechanische Beanspruchung des Anschlußpunktes und der vorzugsweise koaxialen Verbindung des Anschlußpunktes mit einer Sende- und/oder Empfangsschaltung auf der Leiterplatte gering gehalten.

### Zeichnung

Ein Ausführungsbeispiel der Erfindung ist in der Zeichnung dargestellt und in der nachfolgenden Beschreibung näher erläutert. Es zeigen Figur 1 einen Querschnitt durch ein erfindungsgemäßes Funkgerät, Figur 2 verschiedene Positionen eines Antennenelementes am Gehäuse des erfindungsgemäßen Funkgerätes, Figur 3 eine Rückansicht des erfindungsgemäßen Funkgerätes, jedoch ohne Antennenelement, und Figur 4 eine Seitenansicht eines an der Rückwand des Gehäuses des erfindungsgemäßen Funkgerätes angeordneten Antennenelementes mit Schleifkontakt.

### Beschreibung des Ausführungsbeispiels

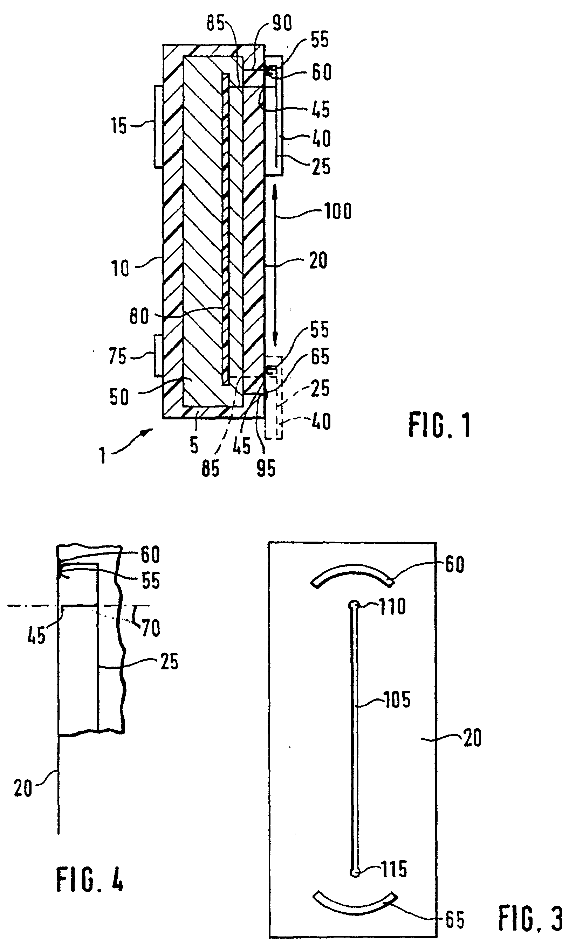

In Figur 1 kennzeichnet 1 ein Funkgerät. Das Funkgerät 1 kann beispielsweise als Mobiltelefon oder als Schnurlostelefon ausgebildet sein. Ein elektrisch nicht leitfähiges Gehäuse 5 weist an einer ersten Seite 10 eine Hörvorrichtung 15 und ein Mikrophon 75 auf. In das Gehäuse 5 ist ein elektrisch leitfähiges metallisches Schirmgehäuse 50 integriert. In das Schirmgehäuse 50 wiederum ist hochfrequenzmäßig abgeschirmt eine Leiterplatte 80 mit einer Sende- und Empfangsschaltung integriert. Je nach Anwendung kann auch nur eine Sendeschaltung oder nur eine Empfangsschaltung auf der Leiterplatte 80 angeordnet sein. Das Mikrophon 75 und die Hörvorrichtung 15 sind jeweils mit der Schaltung auf der Leiterplatte 80 elektrisch leitend verbunden, was jedoch in Figur 1 der Übersichtlichkeit wegen nicht dargestellt ist. Auf einer der ersten Seite 10 gegenüberliegenden zweiten Seite 20 des Gehäuses 5 ist ein elektrisch nicht leitfähiges Gehäuseteil 40 verschiebbar und drehbar gelagert. Das Gehäuseteil 40 umschließt ein Antennenelement 25, das als rechteckförmige metallische Platte ausgebildet ist. Von dem Antennenelement 25 ist ein Anschlußpunkt 45 weggeführt, der über eine Anschlußleitung 85 mit der Schaltung auf der Leiterplatte 80 verbunden ist und über den abzustrahlende Signale in das Antennenelement 25 eingespeist bzw. vom Antennenelement 25 empfangene Signale an die Schaltung auf der Leiterplatte 80 abgegeben werden. Die Anschlußleitung 85 ist beispielsweise koaxial ausgebildet. Ferner umfaßt das Antennenelement 25 an einem Ende einen metallischen Schleifkontakt 55, über den es mit einer ersten elektrisch leitfähigen Kontaktfläche 60 verbindbar ist, die an der zweiten Seite 20 des Gehäuses 5 angeordnet ist und über eine erste Masseleitung 90 mit dem Schirmgehäuse 50 elektrisch leitend verbunden ist. In Figur 1 ist durch einen Doppelpfeil 100 dargestellt, daß das Gehäuseteil 40 mit dem Antennenelement 25 in Längsrichtung im wesentlichen parallel zur Ebene der Leiterplatte 80 an der zweiten Seite 20 des Gehäuses 5 verschiebbar ist. Das Gehäuseteil 40 mit dem Antennenelement 25 ist außerdem im wesentlichen parallel zur Ebene der Leiterplatte 80 drehbar.

Es reicht jedoch bereits aus, wenn das Antennenelement 25 in der entsprechenden Ebene an einem festen Punkt drehbar und nicht verschiebbar gelagert ist.

Das Gehäuseteil 40 mit dem Antennenelement 25 befindet sich gemäß Figur 1 in einer ersten Position, in der das Antennenelement 25 durch das Schirmgehäuse 50 vollständig von der ersten Seite 10 des Gehäuses 5 hochfrequenzmäßig abgeschirmt ist. Das Gehäuseteil 40 befindet sich dabei in einem oberen Bereich des Funkgerätes 1 und ragt nicht über das Funkgerät 1 hinaus. Das Antennenelement 25 ist dabei in Längsrichtung ausgerichtet, also nicht gedreht, so daß es im Querschnitt der Figur 1 in voller Länge sichtbar ist. Der Schleifkontakt 55 ist in der ersten Position mit der ersten Kontaktfläche 60 verbunden. Gemäß einer gestrichelten Darstellung in Figur 1 ist das Gehäuseteil 40 mit dem Antennenelement 25 in einer zweiten Position am unteren Ende des Funkgerätes 1 dargestellt, wobei das Antennenelement 25 in dieser zweiten Position nach unten über das Gehäuse 5 des Funkgerätes 1 hinausragt. Das Antennenelement 25 in der gestrichelt dargestellten zweiten Position ist außerdem gegenüber der Längsachse verdreht, so daß es im Querschnitt der Figur 1 nicht in voller Länge dargestellt ist. Eine zweite elektrisch leitfähige Kontaktfläche 65 am unteren Ende der zweiten Seite 20 des Gehäuses 5 ist über eine zweite Masseleitung 95 mit dem Schirmgehäuse 50 elektrisch leitend verbunden. Der Schleifkontakt 55 ist jedoch in der dargestellten zweiten Position nicht mit der zweiten Kontaktfläche 65 verbunden. Er könnte in dieser zweiten Position allerdings mit einer in den Figuren nicht dargestellten weiteren Kontaktfläche verbunden sein, die an eine Anpaßschaltung angeschlossen ist.

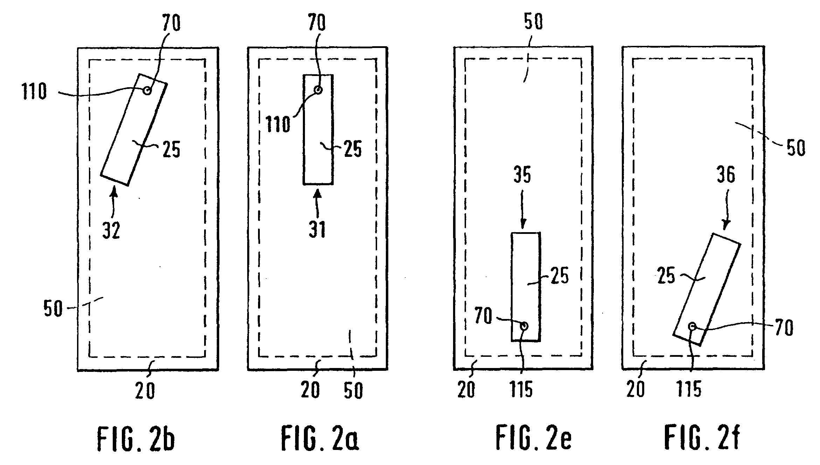

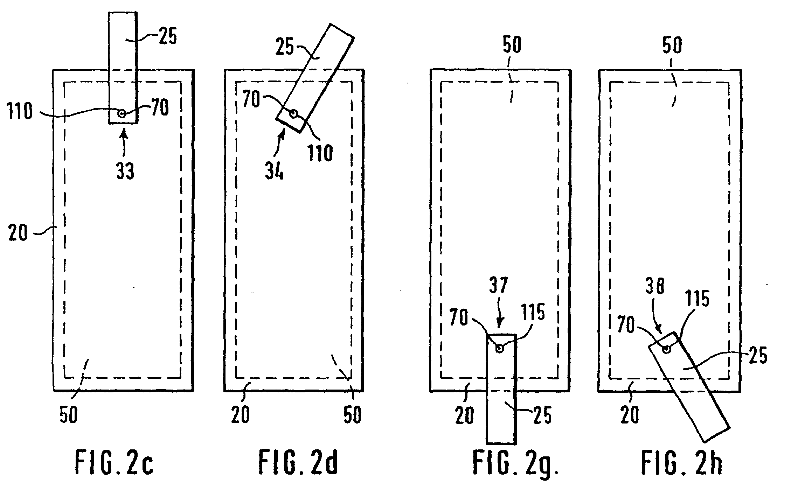

In Figur 3 ist die zweite Seite 20 des Gehäuses 5 in einer Draufsicht dargestellt. Dabei verläuft in der Längssymmetrieachse der zweiten Seite 20 ein Führungsschlitz 105 mit einem ersten Endpunkt 110 im oberen Bereich der zweiten Seite 20 und einem zweiten Endpunkt 115 im unteren Bereich der zweiten Seite 20. Oberhalb des ersten Endpunktes 110 weist die zweite Seite 20 die erste Kontaktfläche 60 auf, die etwa kreissegmentförmig ausgebildet ist und deren Kreismittelpunkt in etwa der erste Endpunkt 110 bildet. Unterhalb des zweiten Endpunktes 115 weist die zweite Seite 20 die zweite Kontaktfläche 65 auf, die ebenfalls etwa kreissegmentförmig ausgebildet ist und deren Kreismittelpunkt in etwa der zweite Endpunkt 115 bildet. Innerhalb der Führungsschiene 105 wird der Anschlußpunkt 45 bzw. die Anschlußleitung 85 geführt. Dabei können für jeden der beiden Endpunkte 110, 115 jeweils vier Rastpositionen vorgesehen sein, die in Figur 2 dargestellt und für die Nutzung besonders günstig gewählt sind. Weitere Rastpositionen können je nach Bedarf vorgesehen werden. Die elektrisch leitende Verbindung der Anschlußleitung 85 mit der Schaltung der Leiterplatte 80 kann beispielsweise ebenfalls über einen Schleifkontakt erfolgen. Eine andere Möglichkeit besteht darin, die Anschlußleitung 85 auf der Leiterplatte 80 zu verlöten und mit entsprechender Länge zu versehen, so daß eine Verschiebung des Antennenelementes 25 über die gesamte Länge des Führungsschlitzes 105 möglich ist. Wählt man die Verbindung der Anschlußleitung 85 mit der Schaltung auf der Leiterplatte 80 ungefähr in der Mitte der Leiterplatte 80, so läßt sich eine möglichst kurze Anschlußleitung 85 realisieren. Das Rasten des Antennenelementes 25 in den möglichen Rastpositionen erfolgt in üblicher, dem Fachmann bekannter Weise, beispielsweise mittels federnder Rastverbindungen.

In Figur 4 ist das Antennenelement 25 in einer Querschnittsdarstellung vergrößert dargestellt. Dabei geht eine Drehachse 70 durch den Anschlußpunkt 45 des Antennenelementes 25. Auf diese Weise wird bei Drehung des Antennenelementes 25 im Führungsschlitz 105 die mechanische Beanspruchung der Anschlußleitung 85 und des Anschlußpunktes 45 verringert. Figur 4 zeigt dabei nur die Vergrößerung eines Ausschnitts aus der Querschnittsdarstellung gemäß Figur 1, in der gleiche Bezugszeichen gleiche Elemente kennzeichnen und das Antennenelement 25 in der ersten Position am oberen Ende des Funkgerätes 1 dargestellt ist.

In Figur 2 ist das Antennenelement 25 in acht verschiedenen Rastpositionen 31,..., 38 dargestellt. Gemäß den Figuren 2a) - d) befindet sich dabei die Drehachse 70 im ersten Endpunkt 110 und gemäß den Figuren 2e) - h) befindet sich die Drehachse 70 im zweiten Endpunkt 115. Die dargestellten Rastpositionen 31,..., 38 sind nur beispielhaft. Weitere Rastpositionen sind je nach Bedarf vorzusehen, auch können weniger Rastpositionen als die dargestellten oder gar keine Rastpositionen realisiert werden. Gemäß Figur 2a) und Figur 2b) befindet sich das Antennenelement 25 vollständig im Bereich des gestrichelt angedeuteten Schirmgehäuses 50 bzw. des Gehäuses 5 des Funkgerätes 1. Es ragt also nicht über die zweite Seite 20 hinaus. Auf diese Weise ergibt sich aufgrund des in das Funkgerät 1 integrierten Schirmgehäuses 50 im Sendebetrieb eine gerichtete Abstrahlung vom Körper des Benutzers weg, so daß nur mit einer geringen Einstrahlung in den Körper bzw. den Kopf des Benutzers zu rechnen ist. Ein solcher Betrieb ist jedoch nur bei günstigen Sendebedingungen störungsfrei realisierbar. Gemäß Figur 2a) befindet sich das Antennenelement 25 parallel zur Längssymmetrieachse der zweiten Seite 20 in einer ersten Rastposition 31. Wird das Funkgerät 1 jedoch vom Benutzer gegenüber der Vertikalen geneigt verwendet, so kommt es bei vertikaler linearer Polarisation der Sende- bzw. Empfangswellen zu Polarisationsverlusten, da die Basisstationsantennen beispielsweise gemäß dem GSM-Standard vertikal linear polarisierte Wellen senden bzw. empfangen. Dem kann der Benutzer dadurch Abhilfe schaffen, daß er das Antennenelement 25 in eine zweite Rastposition 32 gemäß Figur 2b) bringt, die gegenüber der Längssymmetrieachse der zweiten Seite 20 so geneigt ist, daß wieder vertikal linear polarisierte Wellen gesendet bzw. empfangen werden können, ohne daß Polarisationsverluste auftreten. Das Antennenelement 25 ist dabei wieder vertikal ausgerichtet. Die zweite Rastposition 32 gemäß Figur 2b) ist dabei nur beispielhaft dargestellt. Für den Fall, daß die Sendebedingungen sich verschlechtern, ist es sinnvoll, vom gerichteten Sendebetrieb zur omnidirektionalen Abstrahlung gemäß den Figuren 2c) und 2d) überzugehen. Dabei wird das Antennenelement 25 so gedreht, daß es nach oben über die zweite Seite 20 des Funkgerätes 1 hinausragt und so einen rundstrahlenden Monopol bildet. Dabei wird in Kauf genommen, daß die Einstrahlung in den Kopf des Benutzers erhöht wird, jedoch nicht über das bei heutigen Mobiltelefonen mit rundstrahlenden Monopolen in Form von Drahtstäben oder Wendeln hinausgehende Maß. Gemäß Figur 2c) befindet sich das Antennenelement parallel zur Längssymmetrieachse der zweiten Seite 20 in einer dritten Rastposition 33. Für den Fall, daß das Funkgerät 1 vom Benutzer gegenüber der Vertikalen geneigt verwendet wird, empfiehlt sich wieder wie bei Figur 2b) beschrieben eine vierte Rastposition 34, bei der das Antennenelement 25 gegenüber der Längssymmetrieachse geneigt ist, so daß keine Polarisationsverluste auftreten. Auch die Neigung des Antennenelementes 25 in der vierten Rastposition 34 ist in Figur 2d) nur beispielhaft dargestellt.

Die Figuren 2e) - h) unterscheiden sich von den Figuren 2a) - d) nur dadurch, daß das Antennenelement vom ersten Endpunkt 110 zum zweiten Endpunkt 115 verschoben wurde, so daß sich aus Symmetriegründen derselbe Sachverhalt wie bei den Figuren 2a) - d) ergibt, da der Abstand des ersten Endpunktes 110 vom oberen Rand der zweiten Seite 20 in diesem Ausführungsbeispiel genauso groß gewählt ist wie der Abstand des zweiten Endpunktes 115 vom unteren Rand der zweiten Seite 20, und somit prinzipiell die gleichen Wirkungen erzielt werden. Dabei wird noch einmal betont, daß die möglichen Rastpositionen nicht auf die in Figur 2 dargestellten Rastpositionen 31, ..., 38 beschränkt sind, sondern daß beliebige Drehpositionen des Antennenelementes 25 an beliebigen Stellen des Führungsschlitzes 105 je nach Bedarf bzw. Benutzeranforderung realisiert werden können.

Für den Fall, daß omnidirektionale Abstrahlung gewählt wird, ragt das Antennenelement 25 über das Schirmgehäuse 50 des Funkgerätes 1 hinaus und der Schleifkontakt 55 kontaktiert nicht mehr mit der ersten Kontaktfläche 60 bzw. der zweiten Kontaktfläche 65. Dazu sind die Abmessungen der ersten Kontaktfläche 60 bzw. der zweiten Kontaktfläche 65 so zu wählen, daß der Schleifkontakt 55 des Antennenelementes 25 nur dann mit einer der Kontaktflächen 60, 65 kontaktiert, wenn das Antennenelement 25 vollständig vom Schirmgehäuse 50 abgedeckt wird. Für den Fall omnidirektionaler Abstrahlung, das heißt näherungsweise eines rundstrahlenden Monopols ergibt sich eine Antennenimpedanz von ungefähr 50 Ω, so daß eine zusätzliche Anpassungsschaltung an einen Wellenwiderstand von 50 Ω der Anschlußleitung 85 nicht erforderlich ist. Gegebenenfalls könnte jedoch über eine nicht dargestellte weitere Kontaktfläche eine geeignete Anpaßschaltung im Funkgerät 1 kontaktiert werden. Für den Fall vollständiger Abdeckung des Antennenelementes 25 durch das Schirmgehäuse 50 ist jedoch eine zusätzliche Anpaßschaltung zur Transformation der Antennenimpedanz auf den Wellenwiderstand von 50 Ω der Anschlußleitung 85 erforderlich. Diese Anpaßschaltung wird durch die elektrisch leitende Kontaktierung des Antennenelementes 25 über den Schleifkontakt 55 und eine der Kontaktflächen 60, 65 mit dem Schirmgehäuse 50 als Bezugspotentialfläche realisiert. Die Maßnahme bewirkt eine induktive Anpassung der Antennenimpedanz an den Wellenwiderstand der Anschlußleitung 85. Für den Fall, daß zwischen den beiden Endpunkten 110, 115 des Führungsschlitzes 105 Rastpositionen vorgesehen sind, müssen auch dort entsprechende elektrisch leitend mit dem Schirmgehäuse 50 verbundene Kontaktflächen für den Schleifkontakt 55 an der zweiten Seite 20 des Funkgerätes 1 angeordnet werden, um bei vollständiger Abdeckung des Antennenelementes 25 durch das Schirmgehäuse 50 die erforderliche Anpassung der Antennenimpedanz an den Wellenwiderstand der Anschlußleitung 85 zu realisieren.

Auf diese Weise erhält man für Rastpositionen, bei denen eine gerichtete Abstrahlung erfolgt, gegenüber Rastpositionen, bei denen omnidirektionale Abstrahlung erfolgt, eine unterschiedliche Anpaßschaltung.

Zusätzlich oder alternativ zu einer Dreh- und/oder Schiebebewegung kann auch vorgesehen sein, das Gehäuseteil 40 mit dem Antennenelement 25 zwischen mindestens zwei Positionen, die im wesentlichen parallel zur Leiterplatte 80 liegen, hin und her klappbar vorzusehen. Bei dieser Maßnahme können auch weiterhin Schleifkontakte zur Kontaktierung mit den Kontaktflächen 60, 65 am Antennenelement 25 eingesetzt werden.

Es kann auch vorgesehen sein, das Antennenelement 25 nur im Führungsschlitz 105 verschiebbar, aber nicht drehbar auszuführen. Auch auf diese Weise lassen sich Positionen des Antennenelementes 25 mit omnidirektionaler Abstrahlcharakteristik bei über das Schirmgehäuse 50 hinausragendem Antennenelement 25 und mit gerichteter Abstrahlcharakteristik bei vollständiger Abdeckung des Antennenelementes 25 durch das Schirmgehäuse 50 realisieren. Für die erforderliche Anpassung der Antennenimpedanz sind dann entlang des Führungsschlitzes 105 zumindest teilweise entsprechende Kontaktflächen für den Schleifkontakt 55 vorzusehen, die mit einer geeigneten Anpaßschaltung kontaktieren oder mit dem Schirmgehäuse 50.

Eine weitere Realisierungsform kann auch vorsehen, den Führungsschlitz 105 kürzer als in Figur 3 dargestellt, auszuführen. Die Lage des zweiten Endpunktes 115 kann beispielsweise so gewählt werden, daß das Antennenelement 25 am zweiten Endpunkt 115 nicht nach unten über das Gehäuse 5 beziehungsweise das Schirmgehäuse 50 des Funkgerätes 1 hinausragen kann.

## Patentansprüche

1. Funkgerät (1) mit einem Gehäuse (5), wobei das Gehäuse (5) an einer ersten Seite (10) eine Hörvorrichtung (15) und an einer zweiten, der ersten Seite (10) gegenüberliegenden Seite (20) ein Antennenelement (25) umfasst, das an der zweiten Seite (20) des Gehäuses (5) beweglich gelagert ist, wobei das Antennenelement (25) in mindestens einer ersten Position (31, 32, 35, 36) eine gerichtete und in mindestens einer zweiten Position (33, 34, 37, 38) eine omnidirektionale Abstrahlcharakteristik aufweist, wobei das Antennenelement (25) mit einem der Leiterplatte (80) für eine Sende- und/oder Empfangsschaltung umschließenden Schirmgehäuse (50) elektrisch leitend verbunden ist, und wobei das Antennenelement (25) in einer Ebene, die im wesentlichen parallel zur Leiterplatte (80) ist, verschiebbar und/oder drehbar gelagert ist, derart, dass bei omnidirektionaler Abstrahlung das Antennenelement (25) über das Schirmgehäuse (50) hinausragt.

2. Funkgerät (1) nach Anspruch 1, **dadurch gekennzeichnet, daß** das Antennenelement (25) in ein an der zweiten Seite (20) des Gehäuses (5) beweglich gelagertes Gehäuseteil (40) integriert ist.

3. Funkgerät (1) nach Anspruch 1 oder 2, **dadurch gekennzeichnet, daß** die Impedanz des Antennenelementes (25) über verschiedene Anpaßschaltungen transformierbar ist, die unterschiedlichen Positionen (31,...,38) zugeordnet sind.

4. Funkgerät (1) nach Anspruch 1, 2 oder 3, **dadurch gekennzeichnet, daß** das Antennenelement (25) einen Anschlußpunkt (45) umfaßt, der mit einer Sende- und/oder Empfangsschaltung einer Leiterplatte (80) vorzugsweise koaxial verbunden ist.

5. Funkgerät (1) nach Anspruch 1, **dadurch gekennzeichnet, daß** das Antennenelement (25) einen Schleifkontakt (55) umfaßt, der in Abhängigkeit der Position (31,...,38) des Antennenelementes (25) mit einer elektrisch leitfähigen Kontaktfläche (60, 65) auf der zweiten Seite (20) des Gehäuses (5) kontaktiert, wobei die Kontaktfläche (60, 65) elektrisch leitend mit dem Schirmgehäuse (50) verbunden ist.

6. Funkgerät nach Anspruch 1, **dadurch gekennzeichnet, daß** eine Drehachse (70) des Antennenelementes (25) durch den Anschlußpunkt (45) verläuft.

7. Funkgerät (1) nach einem der vorherigen Ansprüche, **dadurch gekennzeichnet, daß** das Antennenelement (25) in mindestens einer Position (31,..., 38) an der zweiten Seite (20) des Gehäuses (5) rastbar ist.

8. Funkgerät nach einem der vorherigen Ansprüche, **dadurch gekennzeichnet, daß** das Antennenelement (25) zwischen zwei im wesentlichen parallel zur Leiterplatte (80) befindlichen Positionen (31,..., 38) klappbar ist.

## Claims

1. Radio (1) having a housing (5), with the housing (5) having a hearing apparatus (15) on a first face (10) and having an antenna element (25) on a second face (20), which is opposite the first face (10), which antenna element (25) is mounted on the second face (20) of the housing (35) such that it can move, with the antenna element (25) having a directional transmission characteristic in at least one first position (31, 32, 35, 36), and having an omnidirectional transmission characteristic in at least one second position (33, 34, 37, 38), with the antenna element (25) being electrically conductively connected to a screening housing (50) which surrounds the printed circuit board (80) for a transmitting and/or receiving circuit, and with the antenna element (25) being mounted such that it can be moved and/or rotated in a plane which is essentially parallel to the printed circuit board (80), such that the antenna element (25) projects beyond the screening housing (50) for omnidirectional transmission.

2. Radio (1) according to Claim 1, **characterized in that** the antenna element (25) is integrated in a housing part (40) which is mounted on the second face (20) of the housing (5) such that it can move.

3. Radio (1) according to Claim 1 or 2, **characterized in that** the impedance of the antenna element (25) can be transformed via various matching circuits which are associated with different positions (31,...,38).

4. Radio (1) according to Claim 1, 2 or 3, **characterized in that** the antenna element (25) has a connection point (45) which is preferably coaxially connected to a transmitting and/or receiving circuit on a printed circuit board (80).

5. Radio (1) according to Claim 1, **characterized in that** the antenna element (25) has a sliding contact (55) which makes contact with an electrically conductive contact surface (60, 65) on the second face (20) of the housing (5) as a function of the position (31,...,38) of the antenna element (25), with the contact surface (60, 65) being electrically conductively connected to the screening housing (50).

6. Radio according to Claim 1, **characterized in that** a rotation axis (70) of the antenna element (25) runs through the connection point (45).

7. Radio (1) according to one of the preceding claims, **characterized in that** the antenna element (25) can be latched in at least one position (31,...,38) on the second face (20) of the housing (5).

8. Radio according to one of the preceding claims, **characterized in that** the antenna element (25) can be folded between two positions (31, ...,38) which are located essentially parallel to the printed circuit board (80).

## Revendications

1. Appareil radio (1) équipé d'un boîtier (5), comprenant sur une première face (10) un dispositif d'audition (15) et sur une deuxième face (20) opposée à la première face (10), un élément d'antenne (25), placé de manière mobile sur la deuxième face (20) du boîtier (5), l'élément d'antenne (25) présentant dans au moins une première position (31, 32, 35, 36) une caractéristique de rayonnement dirigé et dans au moins une deuxième position (33, 34, 37, 38) une caractéristique de rayonnement omnidirectionnel, l'élément d'antenne (25) étant relié d'une manière conductrice d'électricité à un boîtier écran (50) contenant la plaque conductrice (80) pour un montage d'émission et/ou de réception, dans lequel
l'élément d'antenne (25) est placé de manière mobile et/ou rotative dans un plan essentiellement parallèle à la plaquette de circuit imprimé (80), de telle sorte que l'élément d'antenne (25) dépasse le boîtier écran (50) lors d'un rayonnement omnidirectionnel.

2. Appareil radio (1) selon la revendication 1,
**caractérisé en ce que**
l'élément d'antenne (25) est intégré à une pièce de boîtier (40) placée de manière mobile sur la deuxième face (20) du boîtier (5).

3. Appareil radio (1) selon la revendication 1 ou 2,
**caractérisé en ce que**
l'impédance de l'élément d'antenne (25) peut être transformée par différents réseaux d'adaptation, affectés à différentes positions (31, ..., 38).

4. Appareil radio (1) selon la revendication 1, 2 ou 3,
**caractérisé en ce que**
l'élément d'antenne (25) comprend un point de raccordement (45), relié de préférence de manière coaxiale à un montage d'émission et/ou de réception d'une plaquette de circuit imprimé (80).

5. Appareil radio (1) selon la revendication 1,
**caractérisé en ce que**
l'élément d'antenne (25) comprend un contact par frottement (55), placé, suivant la position (31, ..., 38) de l'élément d'antenne (25), contre une surface de contact (60, 65) conductrice d'électricité sur la deuxième face (20) du boîtier (5), la surface de contact (60, 65) étant reliée au boîtier écran (50) de manière à conduire l'électricité.

6. Appareil radio (1) selon la revendication 1,
**caractérisé en ce qu'**
un axe de rotation (70) de l'élément d'antenne (25) passe par le point de raccordement (45).

7. Appareil radio (1) selon l'une quelconque des revendications précédentes,
**caractérisé en ce que**
l'élément d'antenne (25) peut être encliqueté dans au moins une position (31, ..., 38) sur la deuxième face (20) du boîtier (5).

8. Appareil radio (1) selon l'une quelconque des revendications précédentes.
**caractérisé en ce que**
l'élément d'antenne (25) peut être plié entre deux positions (31, ..., 38) essentiellement parallèles à la plaquette de circuit imprimé (80).
